(19) Europäisches Patentamt
European Patent Office
Office européen des brevets

(11) Publication number: **0 107 867**
**B1**

(12) # EUROPEAN PATENT SPECIFICATION

(45) Date of publication of patent specification: **22.06.88**

(51) Int. Cl.⁴: **C 08 B 5/04**, C 09 D 3/16, G 11 B 5/70

(21) Application number: **83200264.6**

(22) Date of filing: **22.02.83**

(54) **Coating composition of partially oxidized nitrocellulose and magnetic pigment.**

(30) Priority: **27.10.82 JP 188925/82**

(43) Date of publication of application:
**09.05.84 Bulletin 84/19**

(45) Publication of the grant of the patent:
**22.06.88 Bulletin 88/25**

(84) Designated Contracting States:
**DE FR GB NL**

(58) References cited:
**DE-A-3 208 865**
**US-A-2 472 591**
**ABSTRACT BULLETIN OF THE INSTITUTE OF PAPER CHEMISTRY, vol. 52, no. 4, October 1981, page 445, no. 4026(U), Appleton, Wisconsin, US**

**The file contains technical information submitted after the application was filed and not included in this specification**

(73) Proprietor: **Asahi Kasei Kogyo Kabushiki Kaisha**
**2-6, Dojimahama 1-chome Kita-ku**
**Osaka-shi Osaka 530 (JP)**

(72) Inventor: **Ishino, Teiichi**
**No. 990, Okatomi-cho**
**Nobeoka-shi Miyazaki (JP)**
Inventor: **Ueda, Ikuo**
**No. 2-13, Shinkoji 1-chome**
**Nobeoka-shi Miyazaki (JP)**
Inventor: **Kai, Rikiya Asahi Kasei Arahira Shataku**
**No. 1281, Kawashima-cho**
**Nobeoka-shi Miyazaki (JP)**
Inventor: **Nagatomo, Sueo**
**No. 57-3, Tomi-cho**
**Nobeoka-shi Miyazaki (JP)**

(74) Representative: **Urbanus, Henricus Maria, Ir. et al**
**c/o Vereenigde Octrooibureaux Nieuwe Parklaan 107**
**NL-2587 BP 's-Gravenhage (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 107 867 B1

(56) References cited:

**ABSTRACTS BULLETIN OF THE INSTITUTE OF PAPER CHEMISTRY, vol. 52, no. 7, January 1982, page 817, no. 7633(U), Appleton, Wisconsin, US**

**CHEMICAL ABSTRACTS, vol. 58, no. 3, February 4, 1963, no. 2561g, Columbus, Ohio, US I.N. ERMOLENKO et al.: "Effect of nitrogen oxides on cellulose containing nitrate ester groups"**

**THE JOURNAL OF THE TEXTILE INSTITUTE, Transactions, January 1945, T1-T5 T. BROWNSETT et al.: "The viscosity of dilute solutions of nitrocelluloses derived from chemically modified cotton celluloses of various types"**

**Description**

The present invention relates to a magnetic coating composition, comprising nitrocellulose and a magnetic oxide pigment or a magnetic metal pigment. More particularly, it relates to a magnetic coating composition superior in dispersion of magnetic pigment.

Heretofore, because of its superior ability to disperse pigment, nitrocellulose has been commonly used for magnetic coating compositions containing magnetic pigment as an essential ingredient.

For example, DE—A—3,208,865 discloses a magnetic recording material comprising a magnetic coating layer on a non-magnetic support. The magnetic coating layer contains ferromagnetic particles dispersed in a binder. Said binder comprises a thermoplastic polyurethane resin and nitrocellulose having an average polymerisation degree of 50—300 and a nitration degree of 10.7 to 13.0.

There still exists a strong demand for technology that makes it possible to efficiently and quickly produce a magnetic coating composition which contains finely dispersed magnetic pigment as an essential ingredient. Conventional nitrocellulose is not desirable because it cannot be used in an amount sufficient to achieve the necessary level of pigment dispersion, because it sometimes impairs the adhesion of the magnetic coating composition to the substrate to be coated when used in a large quantity. Accordingly, there has been a substantial need for a resin having improved dispersion ability and for a magnetic coating composition comprising such a resin.

Such a demand is strong particularly in the area of magnetic recording media such as audio tape and video tape where new technical innovations continually take place.

The present inventors carried out a series of studies on the structure of nitrocellulose and the dispersibility of magnetic pigment. These studies led to the discovery that partially oxidized nitrocellulose having a nitrogen content of 8.0 to 12.5% and containing 3.6 to 13 mmol of carboxyl groups and/or metal salt thereof per 100 g of nitrocellulose exhibits marked ability to disperse magnetic pigment.

Partially oxidized nitrocellulose is a well-known material, and Patents Abstracts of Japan 4, November 1980, No. 173 (c-32) (655) teaches that a partially oxidized nitrocellulose having a carboxyl group content of at least 15 mmol per 100 g of nitrocellulose can be used for preparing printing inks, etc. and has excellent adhesive properties without plasticizers and improved pigment-dispersibility, drying characteristics and heat softening properties. The abstract refers to JP—A—110101/80, which teaches that partially oxidized nitrocellulose having a carboxyl group content of at least 15 mmol, preferably at least 25 mmol per 100 g of nitrocellulose has a large affinity with the surface of conventional printing ink substrates such as cellophane, plastic film, paper, metal, etc., and thereby secures excellent adhesion, which is a well-known defect of the conventional nitrocellulose. Said original JP—A—110101/80, in contrast to the above-mentioned abstract, does not teach any improvement in pigment dispersibility. Regardless of said discrepancy between the original document and the abstract thereof, it is certainly not obvious to solve the pigment dispersibility problems encountered in the magnetic coating field by using a partially oxidized nitrocellulose having a carboxy content well below the minimum given in both the original Japanese document and the abstract thereof.

The magnetic coating composition of the invention is characterized in that the nitrocellulose is partially oxidized nitrocellulose having a nitrogen content of 8.0 to 12.5% and containing 3.6 to 13 mmol in total of carboxyl groups and/or metal salt thereof per 100 g of nitrocellulose.

If the nitrogen content is less than 8.0%, the partially oxidized nitrocellulose is low in solubility in organic solvents such as methyl ethyl ketone, methyl isobutyl ketone, ethyl acetate, butyl acetate and toluene, and it does not exhibit its inherent ability to disperse pigment. If the nitrogen content is more than 12.5%, the nitrocellulose not only has low solubility in organic solvents such as ethyl acetate, propyl acetate and methanol but also it increases the danger of fire. In view of the solubility in organic solvents such as acetates and ketones and the safety in handling, the nitrogen content is particularly preferably within the range of from 10.0 to 12.2%.

If the content of carboxyl groups and/or metal salt thereof is less than 3.6 mmol per 100 g of nitrocellulose, the ability to disperse pigment is not sufficient. If it is more than 13 mmol per 100 g of nitrocellulose, when dissolved in an organic solvent, viscosity of the resulting solution markedly increases presumably due to crosslinking of the carboxyl groups and/or metal salt thereof between the molecules. Therefore it becomes difficult to disperse magnetic pigment.

The carboxyl group content is determined as follows: Accurately weigh about 1.5 g of partially oxidized nitrocellulose into a 100-ml Erlenmeyer flask. Add about 50 ml of a 0.1 N HCl aqueous solution. Shake and let stand for about 2 hours. Filter the contents and wash the partially oxidized nitrocellulose with deionized water throughly until the washings become completely neutral. Place the washed partially oxidized nitrocellulose in a beaker together with a small amount of water. Add 50 ml of a 0.05 M aqueous solution of calcium acetate to the beaker. Shake and let stand overnight. Take 20 ml of the supernatant liquid from the beaker, and titrate with a 0.01 N NaOH aqueous solution using phenolphthalein indicator. Perform the blank test for 20 ml of a 0.05 M calcium acetate aqueous solution. The carboxyl group content can be calculated according to the following formula.

$$\text{Carboxyl group content} = \frac{\text{NaOH titrated (ml)} - \text{NaOH titrated in blank test (ml)}}{20} \times \frac{\text{quantity of water*(g)}+50}{\text{Sample weight}}$$

*Water: placed in a beaker together with the washed partially oxidized nitrocellulose

The content of the metal salt of the carboxyl groups is determined as follows: First, measure the carboxyl group content of partially oxidized nitrocellulose in the same manner as described above. Accurately weigh about 1.5 g of the same partially oxidized nitrocellulose into a beaker. Add 50 ml of a 0.05 M aqueous solution of calcium acetate to the beaker. Shake and let stand overnight. Take 20 ml of the supernatant liquid from the beaker, and titrate with a 0.01 N NaOH aqueous solution using phenolphthalein indicator. Perform the blank test for 20 ml of a 0.05 M calcium acetate aqueous solution. The content of metal salt of the carboxyl groups can be calculated according to the following formula.

Content of metal salt of carboxyl groups=

$$\text{Carboxyl group content} - \left[\frac{\text{NaOH titrated (ml)} - \text{NaOH titrated in blank test (ml)}}{20} \times \frac{50}{\text{sample weight}}\right]$$

The molar ratio of the carboxyl group content to the content of metal salt of carboxyl groups in the partially oxidized nitrocellulose of this invention is 100/0 to 0/100 depending on the surface properties, e.g., pH, of the pigment used.

The metal in the metal salt of the carboxyl groups in this invention includes lithium, beryllium, sodium, magnesium, potassium, calcium, manganese, iron, cobalt, nickel, copper and zinc.

The partially oxidized nitrocellulose containing carboxyl groups and/or metal salt thereof is usually prepared by oxidizing nitrocellulose, or oxidizing raw material cellulose and nitrating the oxidized cellulose, and optionally performing a post treatment.

The oxidation of nitrocellulose is accomplished by adding, with heating to 20 to 100°C, an oxidizing agent such as nitrogen oxides, hypochlorous acid, chlorous acid, chloric acid, perchloric acid, permagnanic acid, dichromic acid, metal salts (e.g., Na, Ke, etc.) of the aforesaid acids, or hydrogen peroxide to an aqueous slurry of nitrocellulose or a solution of nitrocellulose dissolved in an organic solvent such as acetone, methyl ethyl ketone, methyl isobutyl ketone, ethyl acetate and butyl acetate. The ketones are preferably used as the organic solvent. Of the oxidizing agents, nitrogen oxides, hydrogen peroxide and hypochlorous acid or its sodium salt are preferably used. The oxidation with nitrogen oxides can be performed either by externally introducing nitrogen oxides into the reaction system or by generating nitrogen oxides in the reaction system e.g., utilizing the reaction as follows:

$$4HNO_3 + Cu \rightarrow Cu(NO_3)_2 + 2H_2O + \underline{2NO_2}$$

The nitration of oxidized cellulose is accomplished as follows: Cellulose raw material is made into an aqueous slurry. Examples of cellulose raw material include cotton linter, wood pulp, cotton, hemp and jute, with cotton linter and wood pulp being preferred. The slurry is heated to 20 to 100°C together with the oxidizing agent described above to give partially oxidized cellulose. The partially oxidized cellulose thus prepared is then nitrated with a nitric acid or a nitric acid/sulfuric acid mixture.

The post treatment is accomplished by adding the thus obtained partially oxidized nitrocellulose in an aqueous solution of hydrochloric acid, metal hydroxides (e.g. NaOH, KOH and $Ca(OH)_2$) or metal salts of acetic acid.

The partially oxidized nitrocellulose containing carboxyl groups can be obtained using nitrogen oxides or the acids described above as the oxidizing agent. In order to completely or partially convert the carboxy groups into a metal salt form, the partially oxidized nitrocellulose may be subjected to the post treatment with metal hydroxides or metal salts of acetic acid. When metal salts of the aforesaid acids (e.g., sodiumhypochlorite) are used as the oxidizing agent the partially oxidized nitrocellulose containing metal salt of carboxyl groups can be obtained, the metal salt of which may be completely or partially converted to carboxy groups by the post treatment with hydrochloric acid.

Examples of magnetic oxide pigments used in this invention are $\gamma$-$Fe_2O_3$, $Fe_3O_4$, cobalt-absorbed or -containing products thereof, and $CrO_2$; and examples of magnetic metal pigments are Fe, Fe-Co, and Fe-Co-Ni.

The magnetic oxide pigments and magnetic metal pigments must be capable of performing magnetic recording. These pigments are comprised of anisotropic acicular particles having an axis ratio (long axis/short axis) of 5/1 to 15/1, the long axis being 0.1 to 2 μm long.

The partially oxidized nitrocellulose containing carboxyl groups and/or metal salt thereof exhibits satisfactory dispersion of magnetic pigments, but it may be incorporated with a synthetic resin binder for improved durability and fastness. The weight ratio of the partially oxidized nitrocellulose to the synthetic resin binder is generally from 0.1 to 4/1 depending on use of the magnetic coating composition. The synthetic resin binder preferably has a molecular weight of 2,000 to 100,000.

Examples of useful synthetic resin binders includes alkyd resin, oil-modified alkyd resin, fatty acid-modified alkyd resin, phenol-modified alkyd resin, rosin-modified alkyd resin, vinyl-modified alkyd resin, rosin-modified maleic resin, maleic resin, rosin-modified phenolic resin, nitrocellulose, ethyl cellulose, cellulose acetate butyrate; butylated melamine resin, butylated urea resin, epoxy resin, polyurethane resin; polyvinyl chloride resin; vinyl chloride/vinyl acetate copolymer resin; vinyl chloride/vinyl acetate/vinyl alcohol copolymer resin; vinyl chloride/vinyl acetate/maleic acid copolymer resin; vinyl acetate resin; acrylic resin, styrene resin; coumarone-indene resin; and mixtures thereof. Polyurethane resin and vinyl chloride/vinyl acetate/vinyl alcohol copolymer resin are preferably used. It is also preferred to use polyisocyanate prepolymer in combination with these resins.

The weight ratio of the magnetic pigment to the partially oxidized nitrocellulose or the total of partially oxidized nitrocellulose and synthetic resin binder is 10/1 to 0.2/1, preferably 5/1 to 0.3/1, depending on use of the magnetic coating composition and type of the magnetic pigment used.

The magnetic coating composition of this invention may be incorporated with dispersants such as alkylpolyether sulfite, alkylbenzene sulfonate, sorbitan alkylate, and lecithin; antisegregation agents such as silicone, lecithin, and lead naphthenate; UV absorbers such as benzophenone and cinnamic ester; drying catalysts such as naphthate, resinate, linoleate, octoate, tallate, and other metal soaps; plasticizers such as phthalate esters, phosphate ester, sebacate ester, adipate ester, and epoxy derivatives; antistatic electricity agents such as carbon black; and lubricants such as metal salts of saturated or unsaturated fatty acids. The weight ratio of each additive to the pigment is 0.001/1 to 0.1/1 depending on use of the magnetic coating composition and type of the magnetic pigment used.

The magnetic coating composition of this invention is prepared in the same manner as for the ordinary coating composition as described in e.g., Shigezo Tochihara, *Progress in Organic Coatings*, vol. 10, pp. 195—204 (1982). For example, the coating composition is prepared by thoroughly mixing the partially oxidized nitrocellulose, a magnetic pigment and an organic solvent such as methyl ethyl ketone, methyl isobutyl ketone, ethyl acetate, butyl acetate and toluene in a kneader, ball mill, sand mill, attritor mill, two-roll mill, or three-roll mill. If desired, a synthetic resin binder and plasticizer and other additives are added and dispersed uniformly. In another method, the partially oxidized nitrocellulose, a magnetic pigment, and an organic solvent are mixed using the above-mentioned mixer, and then the organic solvent is evaporated to form small solid pieces. Thereafter the solid pieces are dissolved in an organic solvent with a synthetic resin binder and plasticizer.

The invention will be now described in detail with reference to the following examples, in which "parts" means "parts by weight". However, the invention is not limited to these examples.

Preparation Example 1

100 parts of HIG20 second-nitrocellulose (a product of Asahi Kasei Kogyo Kabushiki Kaisha) containing 30% of isopropyl alcohol was dissolved in 300 parts of acetone. The solution was placed in an Erlenmeyer flask equipped with a reflux condenser. 4 parts of a 35% hydrogen peroxide solution was added. The flask was heated for 3 hours on a water bath at 70°C. The content was poured into a large amount of water to give partially oxidized nitrocellulose. This product was designated as Sample A. The nitrogen content in Sample A was 11.20%, and the content of carboxyl groups was 3.6 mmol per 100 g of nitrocellulose.

One part of Sample A was added to 20 parts of a 0.005 M aqueous solution of calcium acetate. After standing at room temperature of 3 hours, the solution was poured into a large amount of water. The precipitate was filtered and washed until the washings became neutral. Thus, there was obtained Sample B. Sample B had a nitrogen content of 11.15% and contained 3.6 mmol of carboxyl groups per 100 g of nitrocellulose and 1.4 mmol of metal salt of carboxyl groups per 100 g of nitrocellulose.

One part of Sample A was added to 20 parts of a 0.01 M aqueous solution of ferrous acetate. After standing at room temperature for 1 hour, the solution was poured into a large amount of water. The precipitate was filtered and washed until the washings became neutral. Thus, there was obtained Sample C. Sample C had a nitrogen content of 11.12% and contained 3.6 mmol of carboxyl groups per 100 g of nitrocellulose and 1.8 mmol of metal salt of carboxyl groups per 100 g of nitrocellulose.

Preparation Example 2

100 parts of H20 second-nitrocellulose (a product of Asahi Kasei Kogyo K.K.) wet with 30% of water was placed in a beaker containing 500 parts of water. 200 parts of sodium hypochlorite was added, followed by heating with stirring for 1 hour on a water bath at 50°C. The solution was poured into a large amount of water to give partially oxidized nitrocellulose. This product was designated as Sample D. Sample D had a nitrogen content of 11.60% and contained 7.20 mmol of carboxyl groups per 100 g of nitrocellulose and 5.80 mmol of metal salt of carboxyl groups per 100 g of nitrocellulose.

One part of Sample D was added to 20 parts of a 0.05 N HCl aqueous solution. After standing at room temperature for 2 hours, the solution was poured into a large amount of water. The precipitate was filtered

and washed until the washing became neutral. Thus, there was obtained Sample E. Sample E had a nitrogen content of 11.68% and contained 7.20 mmol of carboxyl groups per 100 g of nitrocellulose and 0.50 mmol of metal salt of carboxyl groups per 100 g of nitrocellulose.

Preparation Example 3

100 parts of purified linter was placed in a desiccator, and 5.8 parts of liquid nitrogen oxide was added. After standing at room temperature for 48 hours, the content was washed with water and dried to give partially oxidized cellulose. This product was then reacted with a mixed acid of $H_2SO_4/HNO_3/H_2O$ (59/23/18 by weight) for minutes to give partially oxidized nitrocellulose. The nitrogen content was 10.42%, and the content of carboxyl groups was 4.8 mmol per 100 g of nitrocellulose. This product was designated as Sample F.

The above procedure was repeated except that 2.9 parts of liquid nitrogen oxide was added, to thereby give partially oxidized nitrocellulose. The product was designated as Sample G (comparison). The nitrogen content was 10.98%, and the content of carboxyl groups was 1.8 mmol per 100 g of nitrocellulose.

Further the above procedure as in the preparation of Sample F was repeated except that pulp was used in place of purified linter and a mixed acid of $H_2SO_4/HNO_3/H_2O$ (25/50/25 by weight) was used, to thereby give partially oxidized nitrocellulose. The product was designated as Sample H (comparison). The nitrogen content was 7.8%, and the content of carboxyl groups was 4.6 mmol per 100 g of nitrocellulose.

Example 1

The following components were mixed and dispersed in a ball mill for 20 hours.

| | Parts |
|---|---|
| Partially oxidized nitrocellulose* | 5 |
| Urethane elastomer** | 20 |
| $\gamma$-$Fe_2O_3$ (long axis 0.5 μm, short axis 0.06 μm) | 40 |
| Methyl ethyl ketone | 12 |
| Methyl isobutyl ketone | 25 |
| Toluene | 25 |

*Samples A, B, C, D, E and F
**"Esten 5703", a product of Goodrich Company

The resulting mixture was applied onto a polished plate glass using a bar coater, followed by drying. Dispersion of pigment was evaluated by measuring gloss by the method described later and particle diameter using a grindometer. The results are shown in Table 1.

Comparative Example 1

Example 1 was repeated, except that the partially oxidized nitrocellulose was replaced by H1/4 second-nitrocellulose and Samples G and H. The results are shown in Table 1. The H1/4 second-nitrocellulose, made by Asahi Kasei Kogyo K.K., had a nitrogen content of 11.70% and contained 1.0 mmol of carboxyl groups per 100 g of nitrocellulose.

TABLE 1

| | Partially oxidized NC or NC | Nitrogen content (%) | Content of carboxyl groups (mmol) | Content of metal salt of carboxyl groups (mmol) | Gloss | Particle diameter µm |
|---|---|---|---|---|---|---|
| Example 1 | A | 11.20 | 3.6 | 0 | 74 | below 10 |
| " | B | 11.15 | 3.6 | 1.4 | 76 | below 10 |
| " | C | 11.12 | 3.6 | 1.8 | 77 | below 10 |
| " | D | 11.60 | 7.2 | 5.8 | 82 | below 10 |
| " | E | 11.68 | 7.2 | 0.5 | 78 | below 10 |
| " | F | 10.42 | 4.8 | 0 | 76 | below 10 |
| Comparative Example 1 | H1/4 | 11.70 | 1.0 | 0 | 31 | 30 to 40 |
| " | Sample G | 10.98 | 1.8 | 0 | 38 | 30 to 40 |
| " | Sample H | 7.8 | 4.6 | 0 | 23 | 30 to 40 |

Measurement of gloss

The gloss of the coating film was measured using a digital variable angle gloss meter at 60°/60° (made by Suga Shikenki Company). The standard black board was assigned a specular gloss value of 91.5. Higher gloss shows better dispersion of pigment.

Measurement of particle diameter with a grindometer

A portion of the mixed coating composition was poured into the groove (deeper one) of a grindometer. The scraping blade was moved to the target 0 at a uniform speed within one second. The state of distribution of particles was read on the scale.

It is seen from the above results that the use of partially oxidized nitrocellulose offers better dispersion than conventional nitrocellulose, and also shortens the dispersion time if the same degree of dispersion as conventional nitrocellulose is to be achieved.

In addition, the partially oxidized nitrocellulose is much improved in the ability to disperse magnetic pigment as compared with conventional nitrocellulose. Therefore, the quantity can be reduced to achieve the same level of dispersion as would be accomplished by conventional nitrocellulose. Thus, according to this invention, it is possible to produce a magnetic coating composition which is not impaired in adhesion to the substrate.

**Claims**

1. A magnetic coating composition, comprising nitrocellulose and a magnetic oxide pigment or a magnetic metal pigment, characterized in that the nitrocellulose is partially oxidized nitrocellulose having a nitrogen content of 8.0 to 12.5% and containing 3.6 to 13 mmol in total of carboxyl groups and/or metal salt thereof per 100 g of nitrocellulose.

2. A magnetic coating composition as claimed in claim 1, further comprising a synthetic resin binder.

3. A magnetic coating composition as claimed in claim 1 or 2, wherein the partially oxidized nitrocellulose is prepared by oxidizing a cellulose selected from the group consisting of cotton linter and wood pulp and then nitrifying the oxidized cellulose.

4. A magnetic coating composition as claimed in claim 1 or 2, wherein the partially oxidized nitrocellulose is prepared by oxidizing a nitrocellulose with an oxidizing agent.

5. A magnetic coating composition as claimed in claim 1 or 2, wherein the magnetic pigment is selected from the group consisting of $\gamma$-$Fe_2O_3$, $Fe_3O_4$, Co-adsorbed or -containing product thereof and $CrO_2$, the pigment having an axis ratio (long axis/short axis) of 5/1 to 15/1 wherein the long axis is within the range of 0.1 to 2 µm long.

6. A magnetic coating composition as claimed in claim 1 or 2, wherein the magnetic pigment is selected from the group consisting of Fe, Fe-Co, or Fe-Co-Ni, the magnetic pigment having an axis ratio of 5/1 to 15/1, wherein the long axis is within the range of 0.1 to 2 µm long.

7. A magnetic coating composition as claimed in claim 1, wherein the weight ratio of the magnetic pigment to the partially oxidized nitrocellulose is within the range of 10/1 to 0.2/1.

8. A magnetic coating composition as claimed in claim 2, wherein the weight ratio of the magnetic pigment to the total of partially oxidized nitrocellulose and synthetic resin binder is within the range of 10/1 to 0.2/1.

9. A magnetic coating composition as claimed in claim 2, wherein the weight ratio of the partially oxidized nitrocellulose to the synthetic resin binder is within the range of from 0.1/1 to 4/1.

**Patentansprüche**

1. Magnetische Beschichtungszusammensetzung, die Nitrocellulose und ein magnetisches Oxidpigment oder ein magnetisches Metallpigment enthält, dadurch gekennzeichnet, daß die Nitrocellulose eine partiell oxidierte Nitrocellulose mit einem Stickstoffgehalt von 8,0 bis 12,5% ist und insgesamt 3,6 bis 13 mMol Carboxylgruppen und/oder ein Metallsalz dieser Gruppen pro 100 g Nitrocellulose enthält.

2. Magnetische Beschichtungszusammensetzung gemäß Anspruch 1, die außerdem ein synthetisches Harz-Bindemittel enthält.

3. Magnetische Beschichtungszusammensetzung gemäß Anspruch 1 oder 2, worin die partiell oxidierte Nitrocellulose dadurch hergestellt wird, daß eine Cellulose oxidiert wird, die aus der aus Baumwollinters und Holzzellstoff bestehenden Gruppe ausgewählt ist, und dann die oxidierte Cellulose nitriert wird.

4. Magnetische Beschichtungszusammensetzung gemäß Anspruch 1 oder 2, worin die teilweise oxidierte Nitrocellulose dadurch hergestellt wird, daß Nitrocellulose mit einem Oxidationsmittel oxidiert wird.

5. Magnetische Beschichtungszusammensetzung gemäß Anspruch 1 oder 2, worin das magnetische Pigment aus der Gruppe bestehend aus γ-$Fe_2O_3$, $Fe_3O_4$, deren Co-Adsorptionsprodukten oder deren Co enthaltenden Produkten und $CrO_2$ ausgewählt ist, wobei das Pigment ein Achsenverhältnis (lange Achse/kurze Achse) von 5/1 zu 15/1 besitzt, und die lange Achse eine Länge im Bereich von 0,1 bis 2 μm hat.

6. Magnetische Beschichtungszusammensetzung gemäß Anspruch 1 oder 2, worin das magnetische Pigment aus der Gruppe bestehend aus Fe, Fe-Co oder Fe-Co-Ni ausgewählt ist; das magnetische Pigment ein Achsenverhältnis von 5/1 zu 15/1 besitzt, worin die lange Achse eine Länge im Bereich von 0,1 bis 2 μm hat.

7. Magnetische Beschichtungszusammensetzung gemäß Anspruch 1, worin das Gewichtsverhältnis des magnetischen Pigments zu der partiell oxidierten Nitrocellulose im Bereich von 10/1 bis 0,2/1 liegt.

8. Magnetische Beschichtungszusammensetzung gemäß Anspruch 2, worin das Gewichtsverhältnis des magnetischen Pigments zu der Summe aus partiell oxidierter Nitrocellulose und synthetischem Harz-Bindemittel im Bereich von 10/1 bis 0,2/1 liegt.

9. Magnetische Beschichtungszusammensetzung gemäß Anspruch 2, worin das Gewichtsverhältnis von partiell oxidierter Nitrocellulose zu synthetischem Harz-Bindemittel im Bereich von 0,1/1 bis 4/1 liegt.

**Revendications**

1. Composition magnétique de revêtement, comprenant de la nitrocellulose et un pigment d'oxyde magnétique ou un pigment de métal magnétique, caractérisée en ce que la nitrocellulose est de la nitrocellulose partiellement oxydée ayant une teneur en azote de 8,0 à 12,5% et contenant 3,6 à 13 mmoles au total de groupes carboxyles et/ou de leur sel de métal pour 100 g de nitrocellulose.

2. Composition magnétique de revêtement selon la revendication 1 comprenant de plus un liant de résine synthétique.

3. Composition magnétique de revêtement selon la revendication 1 ou 2, où la nitrocellulose partiellement oxydée est préparée en oxydant une cellulose choisie dans le groupe consistant en bourre de coton et pulpe de bois puis en nitrifiant la cellulose oxydée.

4. Composition magnétique de revêtement selon la revendication 1 ou 2, où la nitrocellulose partiellement oxydée est préparée par oxydation d'une nitrocellulose avec un agent oxydant.

5. Composition magnétique de revêtement selon la revendication 1 ou 2, où le pigment magnétique est choisi dans le groupe consistant en γ-$Fe_2O_3$, $Fe_3O_4$, son produit adsorbé sur Co ou contenant Co et $CrO_2$, le pigment ayant un rapport des axes (axe long/axe court) de 5:1 à 15/1, où l'axe long est compris entre 0,1 et 2 μm le long.

6. Composition magnétique de revêtement selon la revendication 1 ou 2, où le pigment magnétique est choisi dans le groupe consistant en Fe, Fe-Co ou Fe-Co-Ni, le pigment magnétique ayant un rapport des axes de 5/1 à 15/1, où l'axe long est compris entre 0,1 et 2 μm de long.

7. Composition magnétique de revêtement selon la revendication 1, où le rapport pondéral du pigment magnétique à la nitrocellulose partiellement oxydée est compris entre 10/1 et 0,2/1.

8. Composition magnétique de revêtement selon la revendication 2, où le rapport pondéral du pigment magnétique au total de la nitrocellulose partiellement oxydée et du liant de résine synthétique est compris entre 10/1 et 0,2/1.

9. Composition magnétique de revêtement selon la revendication 2, où le rapport pondéral de la nitrocellulose partiellement oxydée au liant de résine synthétique est compris entre 0,1/1 et 4/1.